Europäisches Patentamt

**European Patent Office**

**Office européen des brevets**

(11) Publication number: **0 015 671**
A1

# EUROPEAN PATENT APPLICATION

(21) Application number: **80300439.9**

(22) Date of filing: **15.02.80**

(51) Int. Cl.³: **F 16 K 15/20**

(30) Priority: **28.02.79 GB 7907154**

(43) Date of publication of application: **17.09.80**
Bulletin 80/19

(84) Designated Contracting States: **DE FR IT NL**

(71) Applicant: **MULTI SCREW PARTS (COVENTRY) LIMITED, Station Road, Coleshill, Birmingham, B46 1JT (GB)**

(72) Inventor: **Taylor, Robert Victor, 974 Warwick Road, Solihull (GB)**

(74) Representative: **Cowan, David Robert et al, WALFORD AND HARDMAN BROWN Trinity House Hales Street, Coventry CV1 1NP West Midlands (GB)**

(54) **Tyre valve.**

(57) A tyre valve suitable for cycles is formed of two main parts (10, 16), a base member (10) attachable to the tyre or inner tube and a valve member (16) fitting into and secured to the base member (10). The valve member (16) is screwed into the base member (10) and is turned by a tool which fits into the inlet end (29) of the valve member (16).

The valve member (16) projects beyond the base member (10) to provide an inlet (27) for connecting a source of compressed gas. Valve means (34, 36) carried by the valve member (16) retains gas in the tyre. The screw-threaded portion (19) of the valve member (16) for connecting to the base member (10) lies intermediate of its length.

TYRE VALVE

This invention relates to tyre valves and in particular to tyre valves suitable for use as a cycle tyre valve.

Cycle tyre valves which are currently used are generally of multi-part construction requiring four or five parts which are assembled together when fitted, see, for example, British Patent 713,032. Moreover the parts have to be taken apart in removing the tyre from the wheel. Many other tyre valves have also been proposed. For example there is disclosed in British Patent 351,083 a tyre valve in which an inner valve member is located in a base member by screw-threaded engagement but the valve member is of two-part construction incorporating a ball joint so that turning of the threaded portion does not rotate the other part of the valve. In British Patent 197,591 there is disclosed another valve of multi-part construction which attempts to make use of a screw-threaded connection between a base member and a valve member. None of these prior valves have solved the problem of providing a valve of simple construction which is efficient in use, cheap to manufacture, satisfactory to inflate and deflate, and is easily repairable.

An object of the invention is to provide a tyre valve which is simple to make and combines several of the above-mentioned desirable attributes.

According to one aspect of the invention a tyre valve comprises a base member having attachment means at one end for attaching the member to a tyre or tyre inner tube, a hollow valve member arranged to fit coaxially within the base member in screw-threaded engagement therewith to connect the base member and valve member together, the valve member incorporating valve means whereby compressed gas introduced through the valve member is retained in the tyre or tube, one end of the valve member projecting beyond the base member to constitute an inlet for the compressed gas and said one end having means for connecting said end to a source of compressed gas, said one end of the valve member having an internal cross-section shaped to receive a turning tool for rotating the valve member relative to the base member.

Preferably the hollow valve member is formed as an integral unit and carries the valve means.

Conveniently the base member has an internal axial opening extending through the member, the opening having a cylindrical portion adjacent the attachment means of smaller diameter than an outer screw-threaded portion in which the valve member is rotatably received and at the junction between the cylindrical portion and screw-threaded portion of said opening is a shoulder which engages with sealing means on the valve member sealing the valve member in the base member.

The outer diameter of the valve member is at a maximum at said one end of the valve member remote from the attachment means and said one end has an outer diameter substantially equal to the maximum outer diameter of the base member.

According to another aspect of the invention a replaceable valve member for the tyre valve of the invention comprises a hollow valve member having an outer screw-threaded portion intermediate of its length, and valve means whereby compressed gas is introduced through the valve member for retention in the tyre, wherein an internal cross-section towards one end of the valve member is shaped to receive a tool for rotating the valve member relative to the base member during attachment to the base member.

Further features of the invention will appear from the following description of two embodiments of the invention given by way of example only and with reference to the drawings in which:

Fig. 1 is  side elevation of a cycle tyre valve partly in section,

Fig. 2 is an end view of the valve of Fig. 1,

Fig. 3 is side elevation corresponding to that of Fig. 1 of a further form of cycle tyre valve, and

Fig. 4 is an end view of the valve of Fig. 3.

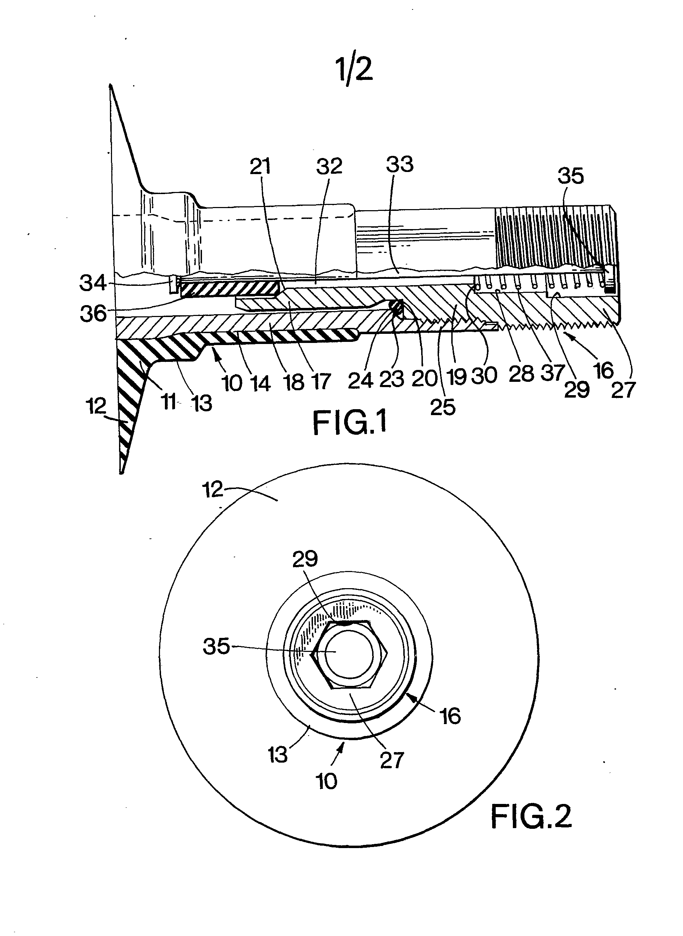

Referring to the drawings and firstly to Figs. 1 and 2, a tyre valve has a base member 10 which is generally cylindrical and around one end of the member is located and bonded a resilient, preferably rubber, sleeve 11 formed with a flange 12. Adjacent the flange the sleeve is formed at 13 to be a push fit in an opening formed in a cycle wheel rim (not shown) to which the valve is to be fitted. The flange 12 is attached to a tyre (if tubeless) or a tyre inner tube by bonding, in known manner, so that, when sold, the tyre or tube has the member 10 fixed to it and is ready for use. In use the member 10 is inserted through the opening in the wheel rim until the portion 13 is engaged in the opening and as a result there is no requirement for the conventional locking nut to be used to hold the valve member in place. The member 10 is recessed at 14 to locate the sleeve 11.

A hollow valve member 16 is a locatable coaxially within the member 10 and comprises a tubular member having at one end a cylindrical portion 17 whose outer diameter is such that it fits within a cylindrical portion 18 of the member 10. At one end of the portion 17 the inner diameter is enlarged to define a seating 21 for an obturating member 36, to be described.

At one end of the portion 17 the member 16 is of enlarged outer diameter at 19 to define at the junction between the portions 17 and 18 a shoulder and a seating 20 for an O-ring seal 23. A corresponding shoulder and seating 24 is formed in the member 19 by enlarging the inner diameter of the member 10 and forming a reduced wall thickness portion 25 of the member 10. Thus, when the members 10 and 16 are assembled, as shown, the seal 23 is located in the seatings 20 and 24.

The inner surface of the portion 25 and the outer surface of the portion 19 are threaded to provide a screw-in connection between the members 10 and 16 and to engage the seal 23 with the seatings 20 and 24.

One end 27 of the member 16 projects from member 10 and has a screw-threaded cylindrical outer surface and stepped inner surfaces 28 and 29, the surface 28 being cylindrical and defining a step 30 and the inner surface 29 nearest the free end 27 of member 16 being

- 5 -

hexagonal in cross-section to receive a hexagonal Allen type key for rotating the member 16 relative to the member 10. Such rotation enables the member 16 to be screwed in and out of the member 10 in assembling the valve or taking it apart. The threaded outer surface of the end portion 27 of the member 16 is of substantially the same diameter as the maximum outer diameter of the member 18. ,

The valve member 16 has a central bore 32 in which is located a rod 33 having flanges 34 and 35. Located around the rod 33 and adjacent the flange 34 is a resilient sleeve 36 which is capable of sealing at one end against the seating 20. The sleeve 36 acts as an obturating member of the valve to prevent air from passing from the tyre through the valve, and to admit air through the valve during inflation. In addition the sleeve 36 can be disengaged from the seating 20 for deflation of the tyre, as will be described.

At the opposite end of the rod 33 to the sleeve 36 a spring 37 is located around the rod and engaged with one end against the flange 35. The opposite end of the spring 37 engages the step 30 and the spring is arranged to urge the rod along the member 16 and thereby urge the sleeve 36 into sealing engagement with the seating 20. The rod 33 can also be moved in the opposite direction against the action of the spring 37 by engaging the flanged end 35 of the rod by means external of the valve. It will be seen that the flange 35 is located inwardly of the free end 27 of the member 16 but is sufficiently close to the end to be readily engaged during inflation or for deflation.

0015671

- 6 -

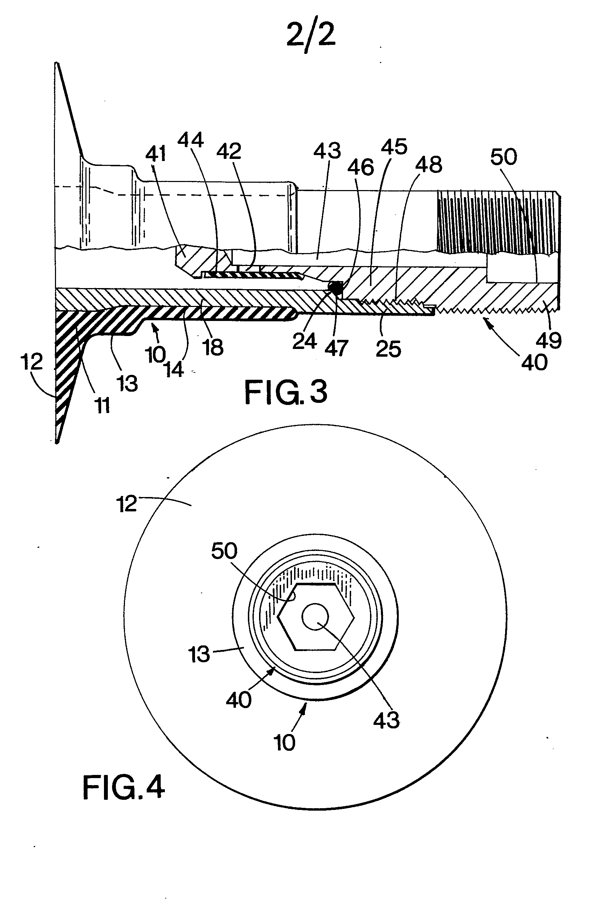

Referring now to Figs. 3 and 4, these figures illustrate an alternative form of valve having the same form of base member 10 as in the Figs. 1 and 2 embodiment. In this case, however, a different valve member 40 is utilised. The valve member 40 is tubular with a closed end 41 adjacent to which is formed an opening 42 communicating between a central opening 43 in the member 40 and the exterior of said member. A replaceable rubber sleeve 44 is located over the downstream side of the opening 42 and extends along the member 40 to provide a one way seal enabling air to be admitted through the valve and preventing air from leaving the tyre, in known manner.

The valve member 40 is of enlarged outer diameter over a portion 45 to provide a shoulder and seating 46 for an O-ring 47 and a threaded portion 48. The O-ring 47 provides a seal between the seating 46 and a seating 24 in the base member 10. The threaded portion 48 is engageable with a threaded portion 25 of the member 10 to connect the members 10 and 40 together.

The central opening 43 is cylindrical except for its outermost end 49 which projects from the member 10 and has a portion 50 of hexagonal section for receiving a tool for rotating the member 40 relative to the member 10. The outer surface of the end 49 is threaded and of a diameter substantially equal to the maximum diameter of the member 10.

The Figs. 3 and 4 embodiment of valve is readily assembled and taken apart and it will be appreciated that with this valve deflation of the tyre requires that the member 40 be released from the member 10.

Similarly, should the sleeve 44 require replacement the member 40 is removed to gain access to the sleeve. Removal is simply effected by engaging a suitable tool into the portion 50 and turning the member 40 relative to the member 10.

With each of the described embodiments it will be appreciated that only two main parts make up the valve as there is no nut to attach the valve to the wheel rim, no nut is necessary for attaching the two valve members together, and the valve members 16 and 40 and the base member 10 are each of integral construction.

At the same time assembly is easily effected and the arrangement is adapted to using any one of at least two of the valve systems currently used in cycle valves.

It will be appreciated that the simplified construction of the valve enables it to be made at a cheaper cost than known valves and an added advantage is that the valve may be withdrawn through the wheel rim opening without having to take the valve apart or remove any nuts because the portion 13 is of larger diameter than the maximum diameter of the base member and of the valve member.

0015671

- 8-

<u>CLAIMS</u>

1. A tyre valve comprising a base member having attachment means at one end for attaching the member to a tyre or tyre inner tube, a hollow valve member arranged to fit coaxially within the base member in screw-threaded engagement therewith to connect the base member and valve member together, the valve member incorporating valve means whereby compressed gas introduced through the valve member is retained in the tyre or tube, one end of the valve member projecting beyond the base member to constitute an inlet for the compressed gas and said one end having means for connecting said end to a source of compressed gas, characterised in that said one end (27) of the valve member (16; 40) has an internal cross-section (29) shaped to receive a turning tool for rotating the valve member (16) relative to the base member (10).

2. A tyre valve according to claim 1 characterised in that the hollow valve member (16; 40) is formed as an integral unit and carries the valve means (33, 34, 35, 36, 37; 14).

3. A tyre valve according to claim 1 or 2 characterised in that the base member (10) has an internal axial opening extending through the member, the opening having a cylindrical portion (18) adjacent the attachment means (11) of smaller diameter than an outer screw-threaded portion (25) in which the valve member (16; 40) is rotatably received.

4. A tyre valve according to claim 3 characterised in at the junction between the cylindrical portion (18) and screw-threaded portion (25) of said opening is a shoulder (24) which engages with sealing means (23) on the valve member (16; 40) sealing the valve member in the base member.

5. A tyre valve according to any one of the preceding claims characterised in that the outer diameter of the valve member is at a maximum at said one end (27; 49) of the valve member (16; 40) remote from the attachment means (11) and said one end has an outer diameter substantially equal to the maximum outer diameter of the base member (10).

6. A tyre valve according to any one of the preceding claims characterised in that said one end (27; 49) of the valve member (16; 40) has an internal opening (29; 50) of hexagonal section extending axially of the valve for receiving said tool.

7. A tyre valve according to any one of the preceding claims characterised in that the attachment means (11) is in the form of a resilient flanged member secured to the end of the base member remote from the valve member, the flanged member having a cylindrical-section portion (13) arranged to be a press fit in an opening in a wheel rim in which the valve is to be located, the outer diameter of said cylindrical-section portion being greater than the maximum diameter of the base member (10) and of the valve member (16; 40).

8. A tyre valve according to any one of the preceding claims characterised in that the valve means includes a spring-biased rod (33) extending axially through the valve member (16) and having an obturating member (36) at one end, the obturating member being urged towards a valve closed position in which the obturating member engages the valve member and the rod and obturating member being movable against the spring bias (37) to release gas from the valve or to allow gas to enter and pass through the valve.

9. A tyre valve according to any one of claims 1-7 characterised in that the valve means includes a resilient sleeve (44) located about an opening (42) in the valve member (40) to act as an obturating member and allow the passage of gas through the valve member and the opening in one direction only.

10. A replaceable valve member for the tyre valve according to claims 1-9 comprising a hollow valve member having an outer screw-threaded portion intermediate of its length, and valve means whereby compressed gas is introduced through the valve member for retention in the tyre, characterised by an internal cross-section (29, 50) towards one end (27; 49) shaped to receive a tool for rotating the valve member (16; 40) relative to the base member (10) during attachment to the base member.

FIG.1

FIG.2

FIG.3

FIG.4

**European Patent Office**

## EUROPEAN SEARCH REPORT

Application number

EP 80 30 0439

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| | FR - A - 576 825 (DUBIED)<br>* fig. 1 to 3 * | 1-6,10 | F 16 K 15/20 |
| | FR - A - 569 619 (J. BALMONET)<br>* fig. 1, position 20 * | 1-6,10 | |
| | FR - A - 551 388 (MICHELIN)<br>* fig. 1, 2 * | 1-6,10 | |
| | US - A - 2 293 132 (H. Z. GORA)<br>* fig. 2, 3 * | 1-4,<br>7,8 | **TECHNICAL FIELDS SEARCHED (Int.Cl.3)** |
| | US - A - 2 188 713 (H.Z. GORA)<br>* fig. 2, 3, 4 * | 1-4,<br>7,8 | B 60 C 25/00<br>B 60 C 29/00<br>F 16 K 15/00 |
| | US - A - 1 690 162 (J.L. FITZPATRICK)<br>* page 1, lines 54 to 59; fig. 1, 2 * | 1,6 | |
| | US - A - 2 240 096 (H.Z. GORA)<br>* fig. 1 to 6 * | 1,10 | |
| | US - A - 2 154 255 (S.T. WILLIAMS)<br>* fig. 1 * | 7 | **CATEGORY OF CITED DOCUMENTS**<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| X | The present search report has been drawn up for all claims | | &: member of the same patent family, corresponding document |

| Place of search | Date of completion of the search | Examiner |
|---|---|---|
| Berlin | 09-05-1980 | SCHLABBACH |

EPO Form 1503.1 06.78